# EUROPÄISCHE PATENTSCHRIFT

(11) **EP 1 687 986 B1**
(45) Veröffentlichungstag und Bekanntmachung des Hinweises auf die Patenterteilung: **18.03.2009**
(21) Anmeldenummer: 04804557.9
(22) Anmeldetag: 23.11.2004
(51) Int. Cl.: H04N 13/00

(54) **ABDECKELEMENT, INSBESONDERE FÜR EIN OPTISCHES MODUL, SOWIE VERFAHREN ZU DESSEN HERSTELLUNG**
COVERING ELEMENT, ESPECIALLY FOR AN OPTICAL MODULE, AND METHOD FOR PRODUCING THE SAME
ELEMENT DE RECOUVREMENT DESTINE NOTAMMENT A UN MODULE OPTIQUE ET SON PROCEDE DE PRODUCTION

(30) Priorität: 25.11.2003 DE 10354945
(43) Veröffentlichungstag der Anmeldung: 09.08.2006
(73) Patentinhaber: Continental Automotive GmbH, 30165 Hannover (DE)
(72) Erfinder: FRENZEL, Henryk, 93059 Regensburg (DE); SCHMIDT, Harald, 93055 Regensburg (DE)
(86) Internationale Anmeldenummer: PCT/EP2004/053064
(87) Internationale Veröffentlichungsnummer: WO 2005/053319

(56) Entgegenhaltungen:
- EP-A- 0 833 182
- DE-A1- 10 162 760
- DE-A1- 19 650 756
- GB-A- 941 976
- US-A- 5 638 082
- US-A- 6 028 672

## Beschreibung

Die vorliegende Erfindung betrifft ein Abdeckelement, insb. für ein optisches Modul mit wenigstens einer Strahlungsquelle, im Folgenden als Mittel zum Emittieren von elektromagnetischer Strahlung bezeichnet, sowie mit wenigstens einer Linseneinheit zum projizieren von elektromagnetischer Strahlung auf eine für elektromagnetische Strahlung sensitive Fläche; wobei zumindest die Emittier-Mittel mit einem für elektromagnetische Strahlung durchlässigen Element abgedeckt sind.

Die Erfindung betrifft weiterhin ein optisches Modul, umfassend ein erfindungsgemäßes Abdeckelement.

Schließlich betrifft die Erfindung auch ein Verfahren zur Herstellung derartiger Abdeckelemente.

Einige Videoanwendungen, insbesondere im Automobilbau, benötigen eine aktive Beleuchtung, deren Wellenlänge im nicht-sichtbaren Bereich liegen sollte, um beispielsweise den Fahrer oder Beifahrer oder andere Verkehrsteilnehmer nicht zu stören oder zu behindern. Für diese Beleuchtung wird heute meist infrarotes (IR) Licht verwendet. Dazu werden spezielle IR-LED, Laserdioden oder auch spezielle Lampen verwendet. Diese Strahler werden durch bestimmte Scheiben oder auch Abdeckelemente gegenüber der Umwelt geschützt.

Bekannte Abdeckelemente für gattungsgemäße Moduln bestehen gegenwärtig aus speziell eingefärbten bzw. beschichteten Kunststoff oder Glas und scheinen undurchsichtig, da sie nur für IR-Licht durchlässig sind und den sichtbaren Bereich sperren, so dass man den Bereich dahinter nicht sehen kann. Derartige Abdeckelemente bezeichnet man deshalb häufig auch als Filterelemente bzw. IR-Filter.

Die GB 941 976 offenbart ein Beleuchtungseinrichtung, dessen Lichtaustrittsebene durch ein Verbund aus Abdeckscheiben und Folien, welche zur Filterung von Infrarotstrahlung dienen, gebildet ist.

Die DE 198 25 269 offenbart einen Lichtkörper bestehend aus nur einer Folie.

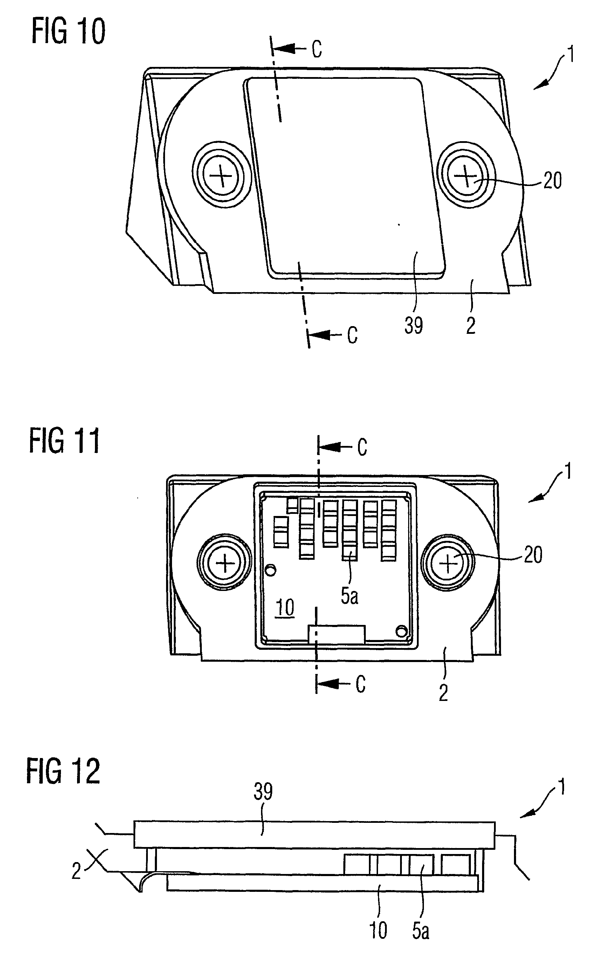

Fig. 10 zeigt beispielhaft in einer perspektivischen Vorderansicht ein als Stereokamera ausgebildetes optisches Modul 1 nach dem Stand der Technik mit als LED-Feld 5a ausgebildete Emittier-Mittel 5, welche im Kameragehäuse 2 auf einem Schaltungsträger 10 angeordnet und mit einem Abdeckelement 39 nach dem Stand der Technik abgedeckt sind. Fig. 11 zeigt die Stereokamera nach Fig. 10 in einer Vorderansicht ohne Abdeckelement; Fig. 12 die Stereokamera nach Fig. 10 bzw. 11 in einer um 90° gedrehten Schnittansicht entlang der Linie C-C.

Die IR-Filtereigenschaften aufweisenden Abdeckelemente 39 nach dem Stand der Technik weisen aufgrund ihrer Aufbauhöhe eine gute Formstabilität auf. Fertigungstechnisch sind sie jedoch nur verhältnismäßig aufwendig herstellbar. Neben kostenintensiven Spritzgusswerkzeugen werden hochwertige Verpackungen benötigt, welche die gespritzten empfindlichen Filterelemente 39 vor Verkratzen z.B. beim Transport oder anderen Beschädigungen schützen. Schließlich benötigen bisherige Filterelemente 39 zusätzliche Befestigungsmittel.

Der Erfindung liegt die Aufgabe zugrunde, ein verbessertes, die vorgenannten Nachteile vermeidendes Abdeckelement, insb. für optische Moduln, nebst einem Verfahren zu dessen Herstellung bereitzustellen.

Diese Aufgabe wird durch ein Abdeckelement mit den Merkmalen gemäß Patentanspruch 1, durch ein optisches Modul mit den Merkmalen gemäß Patentanspruch 10 sowie durch ein Herstellverfahren mit den Merkmalen gemäß Patentanspruch 12 gelöst. Vorteilhafte Aus- und Weiterbildungen, welche einzeln oder in Kombination miteinander eingesetzt werden können, sind Gegenstand der abhängigen Ansprüche.

Die Erfindung baut auf gattungsgemäßen Abdeckelementen, insb. für ein optisches Modul, dadurch auf, dass das Abdeckelement ein ausschließlich aus Folie(n) gefertigtes Etikett ist, welches im Folgenden als Etikettier-Label bezeichnet wird. Die Wahl der Folie(n) folgt dabei bevorzugt Überlegungen bezüglich Festigkeit, Kratzunempfindlichkeit, Transparenz, Dicke, Klebefähigkeit, Farbe und Wertanmutung oder dergleichen mehr.

Erfindungsgemäß bevorzugt ist das Etikettier-Label aus einem Folien-Verbund von wenigstens zwei Folienschichten gefertigt, wobei vorzugsweise von erster und weiterer Folienschicht die eine Folienschicht die andere Folienschicht vollständig, ggf. aber auch nur in Teilbereichen, beispielsweise von 3 x 3 mm, ab- bzw. überdeckt. Freilich sind auch andere zweckmäßige Abmaße denkbar, welche sich letztlich an dem durchsenden Objekt, z.B. einer Laserdiode, oder auch empfangenden Objekt, z.B. der Linseneinheit, orientieren.

Vorzugsweise weist eine Folienschicht wenigstens abschnitts- oder bereichsweise IR-Filtereingenschaften auf, welches sichtbares Licht sperrt und Licht im infraroten (IR) Bereich durchlässt.

Zur Steigerung der Festigkeit wird vorgeschlagen, neben der IR-Filter-Folienschicht eine, insb. preisgünstigere, Folien-schicht vorzusehen, beispielsweise eine transparente Labelschicht, welche auch für elektromagnetische Strahlung im sichtbaren Bereich durchlässig ist. Im Fall nur abschnittsweise IR-Filter-Folienschichten oder dergleichen kommt der transparenten Folienschicht bevorzugt zugleich die Rolle einer Trägerfolie zu.

Zur Steigerung der mechanischen Stabilität wird vorgeschlagen, bevorzugt eine Folienschicht in Gestalt einer Gitterstruktur vorzusehen ist, welche vorzugsweise unsichtbar in Richtung der Emittiermittel angeordnet ist.

Zur Verbesserung der Abstrahl- bzw. Einstrahlcharakteristik, insb. als LED-Feld ausgebildeter Emittier-Mittel, weist beispielsweise eine Folienschicht wenigstens abschnittsweise eine strukturierte Oberfläche auf. Die Struktur bzw. Rauhigkeit der Oberfläche kann im einfachsten Fall ungeordnet (chaotisch), aber auch geordnet, ausgebildet sein, eben so, wie - soweit gewünscht - Streueffekte für eine verbesserte Ausleuchtung einer Szene zweckdienlich erscheinen. Demgegenüber sind strukturierte Oberflächen bzw. Oberflächenbereiche insbesondere dann weitmöglichst zu vermeiden, wenn z.B. mit Laserstrahlen gezielt durch das Label gesendet werden soll, da die Strukturierung den Strahl aufweiten würde. Derartige Durchscheinbereiche sind bevorzugt somit möglichst unstrukturiert auszubilden.

In einer weiteren Ausgestaltung sind eine oder beide Außenschichten des Etikettier-Labels, gleich dem Lotuseffekt, vorzugsweise schmutzabstoßend bzw. selbstreinigend ausgebildet.

Zwecks Vermeidung gesonderter Mittel zur Befestigung des Etikettier-Labels ist erfindungsgemäß bevorzugt am Etikettier-Label seitlich ein wenigstens abschnittsweise umlaufender Klebe-Rand ausgebildet, wobei der mittlere durchscheinende Bereich bevorzugt nicht klebend ausgeführt ist. Dazu kann entweder der Kleber dort ausgespart werden oder eine durchgehende Klebeschicht mit einer zusätzlichen nichtklebenden Folienschicht abgedeckt werden. Der nichtklebende Bereich realisiert in vorteilhafter Weise über längere Zeit, dass im Durchscheinbereich kein Staub und Schmutz anhaftet.

Die Erfindung besteht weiterhin in einem optischen Modul, u.a. umfassend ein erfindungsgemäßes Abdeckelement. Auf diese Weise kommen die im Zusammenhang mit dem Abdeckelement beschriebenen Vorteile auch im Rahmen eines optisches Moduls zur Geltung, welches wiederum Teil eines Gesamtsystems z.B. zur Überwachung von Objekten im Innen- und/oder Außenraum eines Kraftfahrzeuges sein kann.

Nützlicherweise umfassen vorbezeichnete optische Moduln wenigstens ein Mittel zum Emittieren von elektromagnetischer Strahlung sowie wenigstens eine Linseneinheit zum projizieren von elektromagnetischer Strahlung auf eine für elektromagnetische Strahlung sensitive Fläche. Als Emittiermittel kommen insb. LED-Felder und/oder Laserdioden oder dergleichen in Frage. Unter Linseneinheit wird im Kontext der vorliegenden Erfindung eine Linsenhalterung mit wenigstens einer Linse verstanden. Die sensitive Fläche schließlich kann Teil eines CMOS- oder CCD-Halbleiterelements sein oder auch ein einzelnes lichtempfindliches Element wie z.B. eine Fotodiode, welche sozusagen einem Pixel entspricht, wie dies vor allem bei sogenannten Light Detection And Ranging (LIDAR) Systemen angewandt wird.

Wie im Stand der Technik sind zumindest die Emittier-Mittel mit dem erfindungsgemäßen Etikettier-Label abgedeckt.

Alternativ oder kumulativ hierzu überspannt das erfindungsgemäße Etikettier-Label vorzugsweise Emittier-Mittel und Linseneinheit(en) des optischen Moduls, womit vorteilhaft gleichermaßen ein preiswerter mechanischer Schutz z.B. gegen Verkratzen wie auch gegen Wasser und aggressive Medien wie Reinigungsmittel etc. realisiert ist - im Gegensatz zur bislang diesbezüglich problembehafteten Praxis.

Die Gesamtabdeckung von Emittier-Mittel und Linseneinheit(en) mit einem ganzflächig einheitlich aufgebauten Etikettier-Label eignet sich insbesondere für Anwendungen, bei denen nur einzelne Pixel ausgewertet werden, also wo geringere Bildauflösungen ausreichend sind; aber auch für Anwendungen, die den Einfall von Tageslicht extra blocken und nur dasjenige, z.B. IR-, Licht auswerten wollen, das zuvor ausgesandt wurde (LIDAR).

Von der Erfindung mitumfasst sind schließlich auch Etikettier-Label mit Bereichen oder Abschnitten unterschiedlicher Charakteristika. Insbesondere kann ein die Emittier-Mittel abdeckender Bereich als IR-Filter und ein die Linseneinheit(en) abdeckender Bereich als transparente Folie oder dergleichen ausgebildet sein.

Die Erfindung betrifft auch ein Verfahren zur Herstellung derartiger Abdeckelemente, bei dem zunächst aus einer großflächigen, für elektromagnetische Strahlung durchlässigen, Folie bzw. Folien-Verbund Etikettier-Label in Art und Güte eines Abdeckelementes nach der Erfindung ausgestanzt und ggf. gelabelt werden. Im Nachgang zum Verfahrensschritt des Ausstanzens und ggf. Labelns einzelner Folienschichten sind die Etikettier-Label vorzugsweise dergestalt auf einer Trägerbahn anordenbar, dass diese zu einer Rolle aufrollbar sind. Damit sind dermaßen hergestellte Abdeckelemente vorteilhaft unabhängig von einer aufwendigen Verpackung ihrer bestimmungsgemäßen Verwendung, insb. gemäß vorliegender Erfindung, zuführbar.

Die Erfindung hat zunächst eine große Kosteneinsparung zum Vorteil. Für das erfindungsgemäße Etikettier-Label ist nur ein verhältnismäßig preiswertes Etikettenwerkzeug von Nöten. Bekannte IR-Filter aus Kunststoff benötigen dagegen ein verhältnismäßig kostspieliges Spritzwerkzeug. Als weitere Vorteile des Etikettier-Labels ist die geringere Aufbauhöhe, dessen höherer Kratzschutz schon aufgrund der nachgiebigen Folienschicht(en) bzw. -aufbaus sowie eine zusätzliche Designfreiheit zu nennen. Darüber hinaus kann die erfindungsgemäße Abdeckung mit geringem Aufwand noch eine Bedruckung, z.B. "Umlaufender Rand", oder auch Hinweise anderer Art, z.B. "Bitte nicht zudecken" oder dergleichen, enthalten. Die Anlieferung zur Weiterverarbeitung erfindungsgemäßer Etikettier-Label kann preisgünstig auf Rolle erfolgen. Die aus dem Stand der Technik bekannten gespritzten empfindlichen Filter benötigen zum Schutz vor Verkratzen beim Transport u.ä. dagegen hochwertige Verpackungen.

Die vorliegende Erfindung eignet sich für alle lichtemittierenden bzw. -empfangenden Anwendungen, welche ganz oder teilweise eine Abdeckung benötigen, die preiswert, bauniedrig und/oder designbezogen ist, insbesondere für optische Moduln und/oder LIDAR-Anwendungen als Teil eines Gesamtsystems z.B. zur Überwachung von Objekten im Innen- und/oder Außenraum eines Kraftfahrzeuges.

Die Erfindung wird nun mit Bezug auf die begleitenden Zeichnungen anhand bevorzugter Ausführungsformen eines als Stereokamera ausgebildeten optischen Moduls für Videoanwendungen im Automobilbau, auf welches die Erfindung jedoch nicht beschränkt ist, beispielhaft erläutert.

Darin zeigen schematisch:
- Fig. 1: in einer perspektivischen Vorderansicht ein erstes Ausführungsbeispiel einer Stereokamera mit einem erfindungsgemäßen Etikettier-Label, welches als LED-Feld ausgebildete Emittier-Mittel abdeckt;
- Fig. 2: die Stereokamera nach Fig. 1 in einer ersten per- spektivischen Schnittansicht entlang der Linie A-A;
- Fig. 3: die Stereokamera nach Fig. 1 in einer zweiten per- spektivischen Schnittansicht entlang der Linie A-A;
- Fig. 4: eine erste Folienschicht eines Etikettier-Labels nach der Erfindung;
- Fig. 5: eine zweite Folienschicht eines Etikettier-Labels nach der Erfindung;
- Fig. 6: den prinzipiellen Schichtaufbau eines Etikettier- Labels nach der Erfindung;
- Fig. 7: eine alternative Folienschicht eines Etikettier- Labels nach der Erfindung;
- Fig. 8: in einer perspektivischen Vorderansicht ein zweites Ausführungsbeispiel einer Stereokamera mit einem erfindungsgemäßen Etikettier-Label, welches die Op- tiken und als IR-Laser ausgebildete Emittier-Mittel abgedeckt;
- Fig. 9: die Stereokamera nach Fig. 8 in einer Schnittan- sicht entland der Linie B-B;
- Fig. 10: in einer perspektivischen Vorderansicht eine Ste- reokamera nach dem Stand der Technik mit als LED- Feld ausgebildete Emittier-Mittel, welche mit einem bekannten Filterelement abgedeckt sind;
- Fig. 11: die Stereokamera nach Fig. 10 in einer Vorderan- sicht ohne Filterelement; und
- Fig. 12: die Stereokamera nach Fig. 10 bzw. 11 in einer um 90° gedrehten Schnittansicht entlang der Linie C-C.

Bei der nachfolgenden Beschreibung der bevorzugten Ausführungsformen der vorliegenden Erfindung bezeichnen gleiche Bezugszeichen gleiche oder vergleichbare Komponenten.

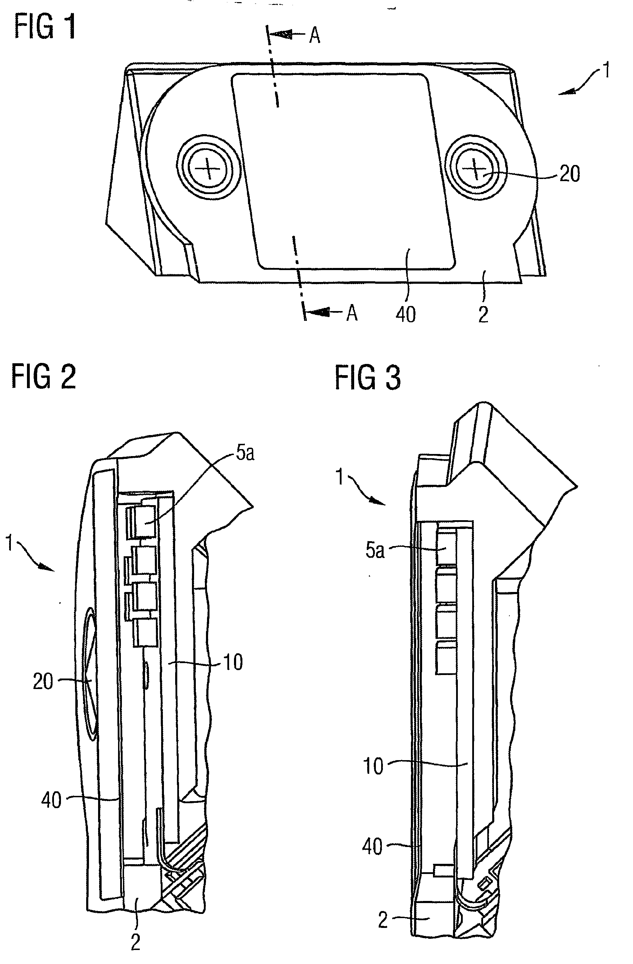

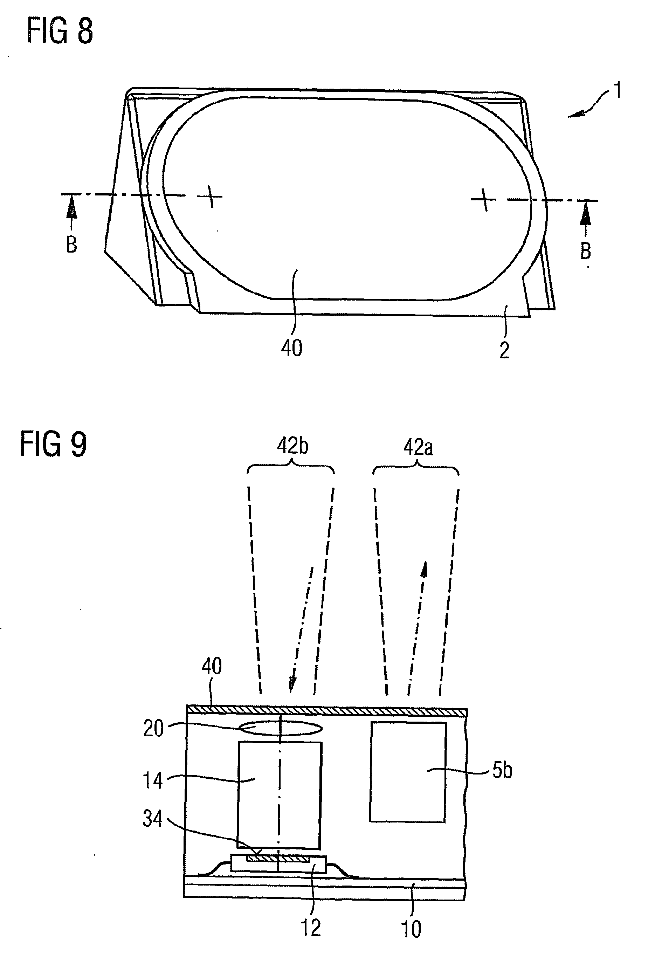

Fig. 1 zeigt in einer perspektivischen Vorderansicht ein erstes Ausführungsbeispiel einer Stereokamera 1 mit einem erfindungsgemäßen Etikettier-Label 40, welches die als LED-Feld 5a ausgebildete Emittier-Mittel 5 abdeckt. Das LED-Feld 5a ist beispielsweise innerhalb des Kameragehäuses 2 auf einem Schaltungsträger 10 angeordnet und dient der aktiven Beleuchtung einer Szene mit Wellenlängen im nicht-sichtbaren Bereich, um Fahrer, Beifahrer und/oder andere Verkehrsteilnehmer nicht zu stören oder zu behindern. Zum Schutz gegenüber der Umwelt ist das LED-Feld 5a, welchem alternativ oder kumulativ auch Laserdioden (vgl. Bezugszeichen 5b in Fig. 9) oder spezielle Lampen als Strahlungsquelle (nicht dargestellt) zugeordnet sein können, mittels eines Etikettier-Labels 40 nach der Erfindung abgedeckt. Jeweils seitlich des LED-Feldes 5a sind eine Linseneinheit, umfassend eine Halterung (vgl. Bezugszeichen 14 in Fig. 9) mit wenigstens einer Linse 20, angeordnet.

Fig. 2 zeigt die Stereokamera 1 nach Fig. 1 in einer ersten perspektivischen Schnittansicht entlang der Linie A-A.

Fig. 3 zeigt die Stereokamera nach Fig. 1 in einer zweiten perspektivischen Schnittansicht entlang der Linie A-A.

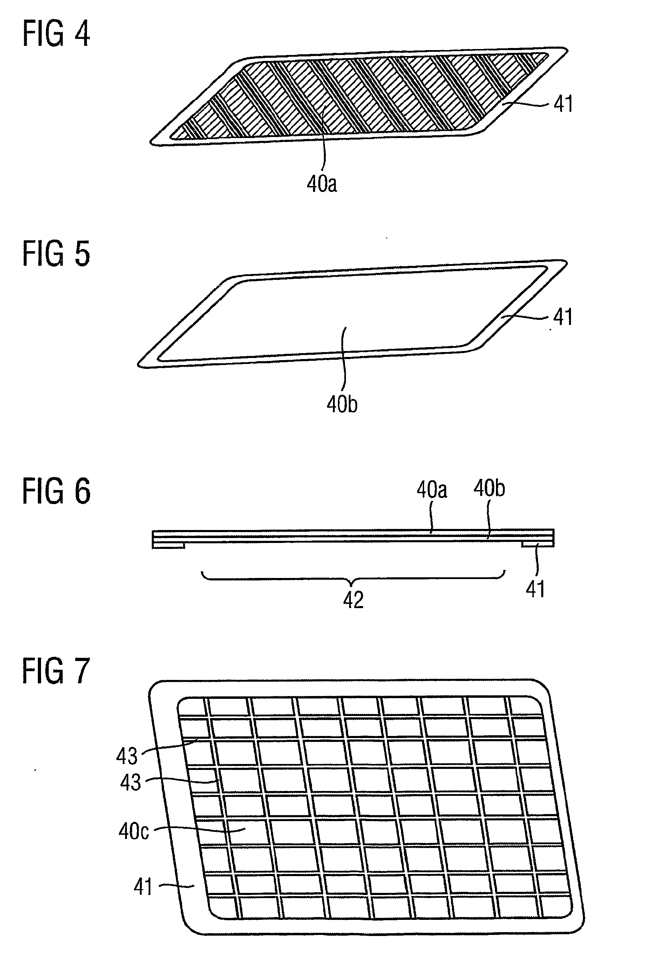

Fig. 4 zeigt eine erste Folienschicht 40a eines Etikettier-Labels 40 nach der Erfindung. Dieses weist wenigstens abschnittsweise, vorliegend jedoch ganzflächig abgebildet, IR-Filtereigenschaften auf, d.h. sichtbares Licht wird gesperrt und Licht im infraroten (IR) Bereich wird durchgelassen. Derartige IR-Filter-Label-Schichten werden auch als IR-transparent "schwarz" oder "dunkel" bezeichnet.

Fig. 5 zeigt eine zweite Folienschicht 40b eines Etikettier-Labels 40 nach der Erfindung. Diese Labelschicht ist beispielsweise für IR-Licht und sichtbares Licht durchlässig und wird mitunter als IR-transparent "weiß" bezeichnet. Das zweite Folienlabel 40b kann im einfachsten Fall auch aus einer transparenten Folienschicht gefertigt sein.

Fig. 6 zeigt den prinzipiellen Schichtaufbau eines Verbundes eines Etikettier-Labels 40 nach der Erfindung. Dargestellt sind eine transparente Träger-Folienschicht 40b, auf welcher ganzflächig, zumindest aber abschnitts- bzw. bereichsweise, eine IR-Filtereigenschaften aufweisende Folienschicht 40a angeordnet ist. Das so aufgebaute Label weist seitlich wenigstens abschnittsweise einen umlaufenden Klebe-Rand 41 auf, wobei der mittlere durchscheinende Bereich 42 bevorzugt nicht klebend ausgeführt ist. Dazu kann - wie in Fig. 6 dargestellt - entweder der Kleber dort ausgespart werden oder eine durchgehende Klebeschicht mit einer zusätzlichen nichtklebenden Folie (nicht dargestellt) abgedeckt werden, welche zugleich die Festigkeit des Labels 40 in vorteilhafter Weise erhöht. Der nichtklebende Bereich realisiert in vorteilhafter Weise über längere Zeit, dass im Durchscheinbereich 42 bzw. den Durchscheinbereichen (vgl. Bezugszeichen 42a, 42b, ... in Fig. 9) kein Staub und Schmutz anhaftet.

Der Schichtaufbau des Etikettier-Labels wurde vorstehend beispielhaft anhand von zwei Folienschichten 40a, 40b dargestellt. In der Praxis bewährt haben sich jedoch mehrschichtige Etikettier-Label 40, welche einen Kompromiss zwischen den Anforderungen an Stabilität, Durchstrahlverhalten und Kosten darstellen. Ein diesbezüglich geeignetes Label 40 weist beispielsweise von außen nach innen folgenden Schichtaufbau auf:
- IR-transparent "schwarz" bzw. "dunkel" 40a
- IR-transparent "weis" 40b
- Transparent (Träger-)Folie 40b
- Klebeschicht, ggf. auch transparentes Doppelklebeband 41
- Transparente Folie zwecks Neutralisierung der Klebeschicht im mittleren Durchscheinbereich 42

Vorbezeichnetes Etikettier-Label 40 hat bei im Wesentlichen vergleichbarer Durchstrahlcharakteristik und Festigkeit gegenüber im Stand der Technik benannten Filterelementen 39 (vgl. Fig. 10 bis 12) ungefähr eine Schichtdicke von nur etwa 0,2 mm.

Zur Steigerung der mechanischen Stabilität des Labels 40 zeigt Fig. 7 in Alleinstellung eine, insb. zur Schicht 40b, alternative bzw. weitere Schicht 40c eines Etikettier-Labels 40 nach der Erfindung, welches beispielsweise in Gestalt einer Gitterstruktur ausgebildet ist, insbesondere als Stanzteil. Alternativ hierzu kann eine Gitterstruktur durch Integration, insb. durch einlaminieren, von Glasfasern, Kunststofffasern 43 oder dergleichen realisiert sein.

Im weiten Sinne versteht man unter Laminieren das dauerhafte Aufbringen eines Überzugs mit einer Schutzfolie aus Kunststoff. Im vorliegenden Fall dient der Begriff "laminieren" insb. als Synonym für die körperhafte (Ober-)Flächenveredelung und/oder -versiegelung der genannten Folien und/oder Schichten 40a, 40b, 40c, 41, 42, 43 ... zu einem dauerhaften Stück bzw. Teil, zu einem hantierbaren bzw. haptischen Gegenstand, welcher im Rahmen der vorliegenden Erfindung als Etikettier-Label oder kurz als Label bezeichnet wird.

Fig. 8 zeigt in einer perspektivischen Vorderansicht ein zweites Ausführungsbeispiel einer Stereokamera 1 mit einem erfindungsgemäßen Etikettier-Label 40, welches die im Kameragehäuse 2 angeordneten Optiken 14, 20 und als IR-Laser 5b ausgebildete Emittier-Mittel 5 abgedeckt.

Fig. 9 schließlich zeigt die Stereokamera 1 nach Fig. 8 in einer Schnittansicht entlang der Linie B-B. Deutlich erkennbar ist, wie ein als Laserdiode 5b ausgebildetes Emittier-Mittel 5 innerhalb eines ersten Durchscheinbereichs 42a IR-Licht ausstrahlt, welches innerhalb eines zweiten Durchscheinbereichs 42b von einer Linseneinheit, umfassend eine Halterung 14 mit wenigstens einer Linse 20, auf die sensitive Fläche 34 eines auf einem Schaltungsträger 10 angeordneten Halbleiterelement 12 projiziert wird. Alternativ oder kumulativ zum dargestellten CMOS- bzw. CCD- Element 12 können auch einzelne lichtempfindliche Fotodioden (nicht dargestellt) oder dergleichen vorgesehen sein. Die mit einer sensitiven Fläche 12 ausgestatteten Elemente 12 können je nach Design und Zweckmäßigkeit gesondert oder zusammen mit den Emittiermitteln 5 auf einem Schaltungsträger 10 angeordnet sein. Das erfindungsgemäße Label 40 schließlich kann sowohl von außen auf des Gehäuse 2 geklebt werden (vgl. Fig. 1 und 8) als auch von innen (nicht dargestellt).

Die vorliegende Erfindung eignet sich für alle lichtemittierenden bzw. -empfangenden Anwendungen, welche ganz oder teilweise eine Abdeckung benötigen, die preiswert, bauniedrig und/oder designbezogen ist, insbesondere für optische Moduln und/oder LIDAR-Anwendungen als Teil eines Gesamtsystems z.B. zur Überwachung von Objekten im Innen- und/oder Außenraum eines Kraftfahrzeuges.

## Patentansprüche

1. Abdeckelement für ein optisches Modul (1) mit
- wenigstens einem Mittel (5) zum Emittieren von elektromagnetischer Strahlung; und
- wenigstens einer Linseneinheit (14, 20) zum projizieren von elektromagnetischer Strahlung auf eine für elektromagnetische Strahlung sensitive Fläche (34);
wobei zumindest die Emittier-Mittel (5) mit einem für elektromagnetische Strahlung durchlässigen Element (39) abgedeckt sind;
**dadurch gekennzeichnet, dass**
das Abdeckelement ausschließlich von einer oder mehreren Folien gebildet ist (40) und einen wenigstens abschnittweise umlaufenden Kleberand aufweist.

2. Abdeckelement nach Anspruch 1, **dadurch gekennzeichnet, dass** das Abdeckelement (40) aus einem Folien-Verbund von wenigstens zwei Folienschichten (40a, 40b, ...) gebildet ist.

3. Abdeckelement nach Anspruch 2, **dadurch gekennzeichnet, dass** von erster (40a) und weiterer (40b) Folienschicht die eine Folienschicht die andere Folienschicht vollständig oder nur in Teilbereichen überdeckt.

4. Abdeckelement nach einem der Ansprüche 1 bis 3, **dadurch gekennzeichnet, dass** eine Folien-Schicht (40a) wenigstens abschnitts- bzw. bereichsweise IR-Filtereigenschaften hat.

5. Abdeckelement nach Anspruch 4, **dadurch gekennzeichnet, dass** neben der IR-Filter-Folienschicht (40a) eine transparente Folienschicht (40b) vorgesehen ist.

6. Abdeckelement nach einem der vorherigen Ansprüche, **dadurch gekennzeichnet, dass** eine Folienschicht (40c) in Gestalt einer Gitterstruktur (42) vorgesehen ist.

7. Abdeckelement nach einem der vorherigen Ansprüche, **dadurch gekennzeichnet, dass** eine Folienschicht (40a, 40b, ...) wenigstens abschnittsweise strukturierte und/oder unstrukturierte Oberflächenbereiche aufweist.

8. Abdeckelement nach einem der vorherigen Ansprüche, **dadurch gekennzeichnet, dass** zumindest die nach außen gerichtete Oberfläche des Abdeckelements (40) schmutzabstoßend bzw. selbstreinigend ausgebildet ist.

9. Optisches Modul (1)
- mit wenigstens einem Mittel (5) zum Emittieren von elektromagnetischer Strahlung; und
- mit wenigstens einer Linseneinheit (14, 20) zum projizieren von elektromagnetischer Strahlung auf eine für elektromagnetische Strahlung sensitive Fläche (34);
wobei zumindest die Emittier-Mittel (5) mit einem für elektromagnetische Strahlung durchlässigen Element (39) abgedeckt sind;
**gekennzeichnet durch** ein Abdeckelement (40) das nach einem der vorherigen Ansprüche ausgebildet ist.

10. Optisches Modul (1) nach Anspruch 9, **dadurch gekennzeichnet, dass** das Abdeckelement (40) Emittier-Mittel (5) und Linseneinheit(en) (14, 20) überspannt.

11. Verfahren zum Herstellen eines Abdeckelements für ein optisches Modul (1) nach einem der Ansprüche 9 oder 10, bei dem aus einer großflächigen, für elektromagnetische Strahlung durchlässigen, Folie (40a) bzw. Folien-Verbund (40a, 40b, ...) Bereiche (40) in Art und Güte eines Abdeckelementes gemäß einem der Ansprüche 1 bis 8 ausgestanzt bzw. ggf. gelabelt werden.

12. Verfahren nach Anspruch 11, bei dem im Nachgang zum Verfahrensschritt des Ausstanzens und ggf. Labelns die Bereiche (40) dergestalt auf einer Trägerbahn anordenbar sind, dass diese zu einer Rolle aufrollbar sind.

## Claims

1. Covering element for an optical module (1) comprising
- at least one means (5) for emitting electromagnetic radiation; and
- at least one lens unit (14, 20) for projecting electromagnetic radiation onto a surface (34) which is sensitive to electromagnetic radiation;
with at least the emitting means (5) being covered with an element (39) which is permeable to electromagnetic radiation;
**characterised in that**
the covering element is exclusively formed of one or more films (40) and has an outer edge running around it which is adhesive at least in sections.

2. Covering element according to claim 1, **characterised in that** the covering element (40) is formed from a composite film of at least two film layers (40a, 40b,...).

3. Covering element according to claim 2, **characterised in that,** of the first (40a) and further (40b), the one film layer covers the other film layer completely or only in some areas.

4. Covering element according to one of claims 1 to 3, **characterised in that** a film layer (40a) has IR filter properties at least in sections and/or areas.

5. Covering element according to claim 4, **characterised in that** a transparent film layer (40b) is provided in addition to the IR filter film layer (40a).

6. Covering element according to one of the preceding claims, **characterised in that** a film layer (40c) is provided in the form of a grid structure (42).

7. Covering element according to one of the preceding claims, **characterised in that** a film layer (40a, 40b,...) has structured and/or unstructured surface regions at least in sections.

8. Covering element according to one of the preceding claims, **characterised in that** at least the surface of the covering element (40) pointing outwards is embodied in a dirt-repelling and/or self-cleaning fashion.

9. Optical module (1)
- comprising at least one means (5) for emitting electromagnetic radiation; and
- comprising at least one lens unit (14, 20) for projecting electromagnetic radiation onto a surface (34) which is sensitive to electromagnetic radiation;
with at least the emitting means (5) being covered with an element (39) which is permeable to electromagnetic radiation;
**characterised by** a covering element (40) which is embodied according to one of the preceding claims.

10. Optical module (1) according to claim 9, **characterised in that** the covering element (40) extends over the emitting means (5) and lens unit(s) (14, 20).

11. Method for producing a covering element for an optical module (1) according to one of claims 9 or 10, in which areas (40) are stamped and/or if necessary labelled in the manner and quality of a covering element according to one of claims 1 to 8 from a large-surface film (40) and/or composite film (40a, 40b,...) which is permeable to electromagnetic radiation.

12. Method according to claim 11, in which further to the method step involving stamping and/or labelling, the areas (40) can be arranged on a sheet material such that this can be rolled onto a roll.

## Revendications

1. Elément de recouvrement pour un module optique (1), comprenant
- au moins un moyen (5) pour émettre un rayonnement électromagnétique ; et
- au moins une unité de lentille (14, 20) pour projeter un rayonnement électromagnétique sur une surface (34) sensible au rayonnement électromagnétique ;
dans lequel au moins les moyens émetteurs (5) sont recouverts d'un élément (39) transparent au rayonnement électromagnétique ;
**caractérisé en ce que**
l'élément de recouvrement est exclusivement formé d'une ou de plusieurs pellicules (40) et présente un bord de collage qui l'entoure au moins par segments.

2. Elément de recouvrement selon la revendication 1, **caractérisé en ce que** l'élément de recouvrement (40) est formé d'un composite de pellicules fait d'au moins deux couches de pellicule (40a, 40b, ...).

3. Elément de recouvrement selon la revendication 2, **caractérisé en ce que,** parmi la première couche de pellicule (40a) et une autre couche de pellicule (40b), une couche de pellicule recouvre l'autre couche de pellicule en totalité ou seulement dans des régions partielles.

4. Elément de recouvrement selon l'une des revendications 1 à 3, **caractérisé en ce qu'**une couche de pellicule (40a) a, au moins par segments ou par régions, des propriétés de filtre IR.

5. Elément de recouvrement selon la revendication 4, **caractérisé en ce qu'**à côté de la couche de pellicule (40a) formant filtre IR, est prévue une couche de pellicule transparente (40b).

6. Elément de recouvrement selon l'une des revendications précédentes, **caractérisé en ce qu'**une couche de pellicule (40c) est prévue sous la forme d'une structure de grille (42).

7. Elément de recouvrement selon l'une des revendications précédentes, **caractérisé en ce qu'**une couche de pellicule (40a, 40b, ...) présente des régions de surface structurées et/ou non structurées au moins par segments.

8. Elément de recouvrement selon une des revendications précédentes, **caractérisé en ce qu'**au moins la surface de l'élément de recouvrement (40) qui est dirigée vers l'extérieur est de constitution anti-encrassement ou autonettoyante.

9. Module optique (1) comprenant
- au moins un moyen (5) pour émettre un rayonnement électromagnétique ; et
- au moins une unité de lentille (14, 20) pour projeter un rayonnement électromagnétique sur une surface (34) sensible au rayonnement électromagnétique ;
dans lequel au moins les moyens émetteurs (5) sont recouverts d'un élément (39) transparent au rayonnement électromagnétique ;
**caractérisé par** un élément de recouvrement (40) qui est constitué selon l'une des revendications précédentes.

10. Module optique (1) selon la revendication 9, **caractérisé en ce que** l'élément de recouvrement (40) recouvre les moyens émetteurs (5) et l'unité ou les unités de lentille(s) (14, 20).

11. Procédé pour fabriquer un élément de recouvrement pour un module optique (1) selon l'une des revendications 9 ou 10, dans lequel dans une pellicule (40a) ou dans un composite de pellicules (40a, 40b, ...) de grande surface, transparent(e) à un rayonnement électromagnétique, des régions (40) sont découpées ou éventuellement étiquetées à la façon d'un élément de recouvrement selon l'une des revendications 1 à 8.

12. Procédé selon la revendication 11, dans lequel à la suite de l'étape de procédé de découpage ou éventuellement d'étiquetage, les régions (40) peuvent être disposées sur une bande porteuse de telle manière qu'elles puissent être enroulées en un rouleau.
